# EUROPÄISCHE PATENTSCHRIFT

(11) **EP 1 330 868 B1**
(45) Veröffentlichungstag und Bekanntmachung des Hinweises auf die Patenterteilung: **08.12.2004**
(21) Anmeldenummer: 01974327.7
(22) Anmeldetag: 05.10.2001
(51) Int. Cl.: H02P 3/12

(54) **SCHALTUNGSANORDNUNG MIT EINEM ZWEI ANSCHLÜSSE AUFWEISENDEN ELEKTROMOTOR**
CIRCUIT ARRANGEMENT WITH AN ELECTRIC MOTOR COMPRISING TWO TERMINALS
CIRCUIT DE COMMANDE AVEC UN MOTEUR ELECTRIQUE PRESENTANT DEUX POINTS DE BRANCHEMENT

(30) Priorität: 03.11.2000 DE 10054528
(43) Veröffentlichungstag der Anmeldung: 30.07.2003
(73) Patentinhaber: Conti Temic Microelectronic GmbH, 90411 Nürnberg (DE)
(72) Erfinder: DEINZER, Rudolf, 92318 Neumarkt (DE); JEHN, Rainer, 85055 Ingolstadt (DE)
(86) Internationale Anmeldenummer: PCT/EP2001/011491
(87) Internationale Veröffentlichungsnummer: WO 2002/037662

(56) Entgegenhaltungen:
- EP-A- 0 978 401
- DE-A- 4 027 767
- GB-A- 2 344 477
- PATENT ABSTRACTS OF JAPAN vol. 004, no. 015 (E-170), 5. Februar 1980 (1980-02-05) & JP 54 156116 A (MITSUBISHI ELECTRIC CORP), 8. Dezember 1979 (1979-12-08)

## Beschreibung

Die Erfindung betrifft eine Schaltungsanordnung eines zwei Anschlüsse aufweisenden Elektromotors gemäß dem Oberbegriff des Patentanspruchs 1.

In modernen Kraftfahrzeugen werden eine Vielzahl von Elektromotoren verwendet, die hauptsächlich im Bereich Komfort Stellfunktionen übernehmen. Dabei ist jeder Elektromotor mit einer Schaltungsanordnung verbunden, durch die der Elektromotor gemäß den vom Kraftfahrer oder von übergeordneten Steuergeräten angeforderten Stellfunktionen geschaltet wird. Dazu sind auf der Schaltungsanordnung mehrere Schalter angeordnet, die den Vorlauf, den Rücklauf sowie das Sperren des Elektromotors bewirken.

Das Sperren des ruhenden Elektromotors erfolgt in einfacher Weise elektronisch, in dem die zwei Anschlüsse des Elektromotors kurz geschlossen werden. Dabei wirkt bei einer von außen erzwungenen Drehung der Ankerwelle des Elektromotors nach der Lenz'schen Regel die generierte elektrische Leistung ihrer Ursache entgegen, wodurch die Drehung der Ankerwelle maximal gedämpft wird. DE 4 027 767 offenbart einen solchen Antrieb.

Diese Dämpfung ist ausreichend um die Drehung der Ankerwelle des Elektromotors zu verhindern, wenn beispielsweise über Zahnräder mit der Ankerwelle verbundene Teile geringer Masse beim Beschleunigen oder beim Verzögern eines Kraftfahrzeuges auf die Ankerwelle einwirken.

Dabei wird die Schaltungsanordnung entsprechend aufwendiger, wenn das Sperren des ruhenden Elektromotors nur für eine Drehrichtung der Ankerwelle bewirkt werden soll, während die jeweils anderen Drehrichtung der Ankerwelle ohne Dämpfung zu drehen bleiben soll.

Der Erfindung liegt die Aufgabe zugrunde, eine Schaltungsanordnung eines zwei Anschlüsse aufweisenden Elektromotors gemäß dem Oberbegriff des Patentanspruchs 1 anzugeben, die das Sperren der Ankerwelle des ruhenden Elektromotors lediglich für eine der beiden Drehrichtungen bewirkt. Dabei sollte die Schaltungsanordnung einfach Aufgebaut und kostengünstig zu produzieren sein..

Diese Aufgabe wird erfindungsgemäß durch die Merkmale im Kennzeichen des Patentanspruchs 1 gelöst, wonach die Schaltungsanordnung des Elektromotors die folgenden Bestandteile aufweist:
- Ein Anschluß des Elektromotors ist mit einem ersten Stromzweig verbunden, und der andere Anschluß des Elektromotors ist mit einem zweiten Stromzweig verbunden.
- Beide Stromzweige weisen an dem dem Elektromotor entgegengesetzten Ende jeweils einen Umschalter auf, durch die der erste und der zweite Stromzweig zum Betrieb des Elektromotors entsprechend der gewünschten Drehrichtung mit einer Stromquelle oder mit einem Massezweig verbunden werden.
- Zum Sperren des Elektromotors ist eine erste Diode in Sperrichtung zwischen dem ersten Stromzweig und dem Massezweig geschaltet, wodurch ein für eine Drehrichtung des Elektromotors wirksamer Freilaufkreis entsteht.
- Zudem ist zum Sperren des Elektromotors eine zweite Diode in Sperrichtung zwischen dem zweiten Stromzweig und dem Massezweig geschaltet, wodurch ein weiterer, für die andere Drehrichtung wirksamer Freilaufkreis entsteht.
- Zudem wird ein Schalter benötigt, der Abhängig davon, welche Drehrichtung gesperrt und welche Drehrichtung des Elektromotors ohne Dämpfung zu drehen bleiben soll, in der Schaltungsanordnung enthalten ist:
   - Entweder ist in dem ersten Stromzweig zwischen dem ersten Umschalter und dem Anschluß der ersten Diode an dem ersten Stromzweig der Schalter angeordnet, wodurch eine Drehrichtung des Elektromotors gesperrt ist,
   - oder es ist in dem zweiten Stromzweig zwischen dem zweiten Umschalter und der Diode des zweiten Stromzweigs der Schalter angeordnet, wodurch die andere Drehrichtung des Elektromotors gesperrt ist.

Der erste und der zweite Umschalter sowie der Schalter können vorteilhaft durch Relais gebildet werden.

Die erfindungsgemäße Schaltungsanordnung eines zwei Anschlüsse aufweisenden Elektromotors ermöglicht mit einem einfachen Aufbau die Sperrung genau einer Drehrichtung der Ankerwelle des ruhenden Elektromotors und ist dabei kostengünstig herzustellen.

Im folgenden ist die Schaltungsanordnung eines zwei Anschlüsse aufweisenden Elektromotors, der die Zahnstange eines Gurtbringers des Anschnallgurtes eines Personenkraftwagens antreibt, im Zusammenhang mit drei Figuren dargestellt und erläutert.

Es zeigen:
- Figur 1: das Schaltbild der Schaltungsanordnung eines zwei Anschlüsse aufweisenden Elektromotors,
- Figur 2a/2b: Schaltbilder der Schaltungsanordnung mit dem Schalter im ersten Stromzweig für jeweils eine erzwungene Drehrichtung der Ankerwelle mit Darstellung der gegebenenfalls resultierenden Stromflüsse,
- Figur 3a/3b: Schaltbilder der Schaltungsanordnung mit dem Schalter im zweiten Stromzweig für jeweils eine erzwungene Drehrichtung der Ankerwelle mit Darstellung der gegebenenfalls resultierenden Stromflüsse.

Bei zweitürigen Personenkraftwagen sind die Fahrzeugtüren derart groß Dimensioniert, daß die beispielsweise in der B - Säule integrierten Anschnallgurte der vorderen Fahrzeugsitze von dem Kraftfahrer und dem Beifahrer nur mit Mühe gegriffen und herangezogen werden können. Zur Erhöhung des Komforts können derartige Personenkraftwagen mit Gurtbringern ausgestattet werden, die beispielsweise nach dem Ansprechen einer Sitzbelegungserkennung und dem Schließen der Türen den Anschnallgurt in eine leicht zu greifende Position führen.

Dazu wird von einem Elektromotor, auf dessen Ankerwelle ein Zahnrad befestigt ist, eine Zahnstange aus- und eingefahren, die ein den Anschnallgurt führendes U-förmiges Kopfstück aufweist. Die Weglänge, um welche die Zahnstange vom Elektromotor aus- und eingefahren wird, wird von einem dem Gurtbringer zugeordneten Steuergerät geregelt, das mit Sensoren zur Bestimmung der Position der Zahnstange verbunden ist.

Insbesondere durch Störungen dieser Sensoren kann es vorkommen, daß die Zahnstange in einem der Steuergerät unbekannten Zustand verbleibt. Dabei ist es wichtig, daß die Zahnstange des Gurtbringers leicht in seine Ruheposition zurückgeschoben, d.h. eingefahren werden kann, die von dem Steuergerät wieder erkannt wird.

Im Gegensatz dazu darf die Zahnstange des Gurtbringers nicht bei der Verzögerung des Personenkraftwagens selbsttätig ausfahren. Dazu werden die Anschlüsse des Elektromotors für diese Drehrichtung der Ankerwelle über einen Freilaufkreis kurz geschlossen.

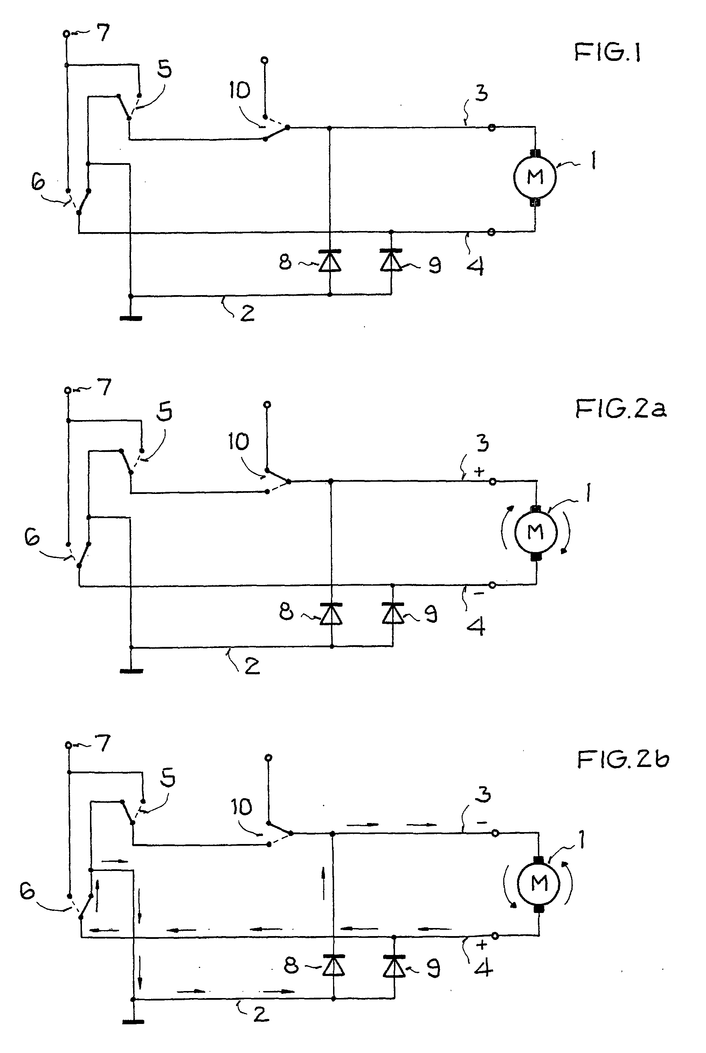

In der Figur 1 ist die Schaltungsanordnung des zwei Anschlüsse aufweisenden Elektromotors zum aus- und einfahren der Zahnstange des Gurtbringers dargestellt.

Die Schaltungsanordnung besteht aus dem zwei Anschlüsse aufweisenden Elektromotor 1, der die nicht dargestellte Zahnstange des Gurtbringers antreibt. Ein Anschluß des Elektromotors 1 mit einem ersten Stromzweig 3 verbunden, während der andere Anschluß des Elektromotors 1 mit einem zweiten Stromzweig 4 verbunden ist.

Der erste Stromzweig 3 weist an seinem dem Elektromotor 1 entgegengesetzten Ende einen ersten Umschalter 5 auf, während der zweite Stromzweig 4 entsprechend einen zweiten Umschalter 6 aufweist. Mittels der beiden Umschalter 5, 6 werden zum Betrieb des Elektromotors 1 der erste und der zweite Stromzweig 3, 4 entsprechend der gewünschten Drehrichtung der Ankerwelle gegen eine Stromquelle 7 oder gegen einen Massezweig 2 geschaltet, Dabei wird immer einer der beiden Umschalter 5, 6 mit der Stromquelle 7 verbunden, während der jeweils andere der beiden Umschalter 5, 6 mit dem Massezweig 2 verbunden wird.

Zum Sperren des Elektromotors ist eine ersten Diode 8 in Sperrichtung zwischen dem ersten Stromzweig 3 und dem Massezweig 2 geschaltet. Zudem ist eine zweite Diode 9 in Sperrichtung zwischen dem zweiten Stromzweig 4 und dem Massezweig 2 geschaltet. Durch die beiden Dioden 8, 9 werden zwei Freilaufkreise gebildet, die bei ruhenden, nicht bestromten Elektromotor 1 einen Kurzschluß der beiden Anschüsse des Elektromotors 1 bewirken, so daß sich die Ankerwelle bei einer über die Zahnstange einwirkenden Kraft nicht dreht.

Für die Möglichkeit, daß durch die Freilaufkreise lediglich eine der beiden Drehrichtungen der Ankerwelle gesperrt wird, ist abhängig von der zu sperrenden Drehrichtung des ruhenden Elektromotors 1 ein Schalter 10 in dem ersten Stromzweig 3 oder dem zweiten Stromzweig 4 angeordnet.

Dabei wird der Schalter 10 zum Sperren der einen Drehrichtung der Ankerwelle in dem ersten Stromzweig 3 zwischen dem Umschalter 5 und dem Anschluß der ersten Diode 8 am ersten Stromzweig 3 angeordnet.

Alternativ kann der Schalter 10 zum Sperren der anderen Drehrichtung der Ankerwelle in dem zweiten Stromzweig 4 zwischen dem Umschalter 6 und dem Anschluß der zweiten Diode 9 am zweiten Stromzweig 4 angeordnet werden.

Die verschiedenen notwendigen Kombinationen der Stellungen der beiden Umschalter 5, 6 und des Schalters 10, die als Relais ausgebildet sind, sind in einem Logikbaustein gespeichert, der Teil der Schaltungsanordnung ist.

Bei geschlossenem Schalter 10 und mit auf den Massezweig 2 geschalteten beiden Umschaltern 5, 6 bildet sich für beide Drehrichtungen der Ankerwelle des Elektromotors 1 in der Schaltungsanordnung eine leitende Verbindung zwischen den Anschlüssen des Elektromotors 1 über den ersten Stromzweig 3, dem Schalter 10, dem Umschalter 5, dem Massezweig 2, dem Umschalter 6 und dem zweiten Stromzweig 4 aus, so daß eine erzwungene Drehung der Ankerwelle für beide Drehrichtungen gedämpft wird.

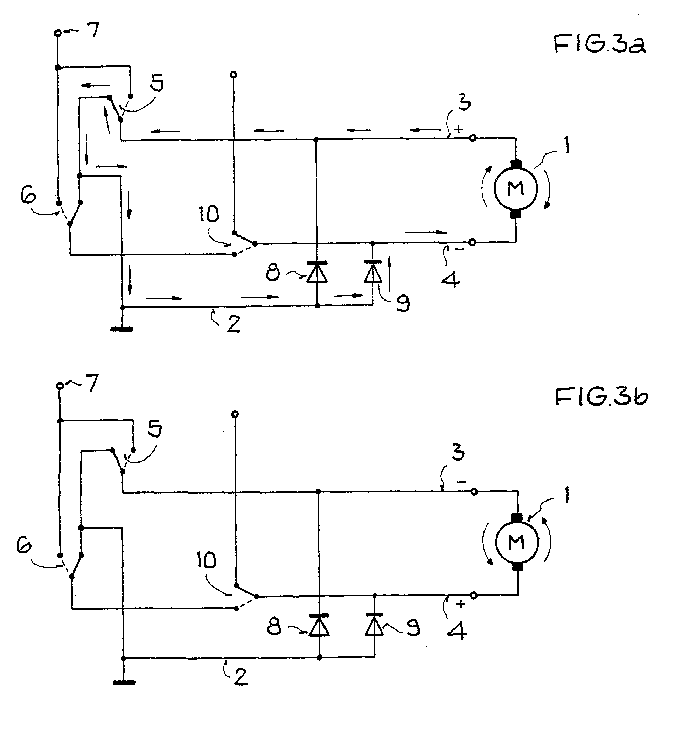

In den Figuren 2a und 2b ist der gegebenenfalls resultierende Stromfluß in der Schaltungsanordnung bei im ersten Stromzweig 3 angeordnetem Schalter 10 für beide über. die Zahnstange erzwungene Drehrichtungen der Ankerwelle des nicht bestromten Elektromotors 1 dargestellt. Die Position des Schalters 10 im ersten Stromzweig 3 legt dabei fest, welche der beiden Drehrichtungen der Ankerwelle beim Einwirken einer äußeren Kraft gesperrt bleibt.

Figur 2a zeigt die Schaltungsanordnung für eine Drehrichtung der Ankerwelle des Elektromotors 1, die beispielsweise dem Einschieben des Gurtbringers entspricht, und die als Drehung im Uhrzeigersinn dargestellt ist. Dabei bildet der mit dem ersten Stromkreis 3 verbundene Anschluß des Elektromotors 1 den Pluspol und der mit dem zweiten Stromzweig 4 verbundene Anschluß des Elektromotors 1 den Minuspol. Es bildet sich aufgrund der sperrenden zweiten Diode 9 in der Schaltungsanordnung keine leitfähige Verbindung zwischen den beiden Anschlüssen des Elektromotors 1 aus, so daß sich die Zahnstrange ohne gedämpft zu werden leicht einschieben läßt.

Figur 2b zeigt den (technischen) Stromfluß in der Schaltungsanordnung für die andere Drehrichtung der Ankerwelle des Elektromotors 1, die beispielsweise dem Ausfahren des Gurtbringers bei der Verzögerung des Personenkraftwagens entspricht, und die als Drehung gegen den Uhrzeigersinn dargestellt ist. Dabei bildet der mit dem ersten Stromzweig 3 verbundene Anschluß des Elektromotors 1 den Minuspol und der mit dem zweiten Stromzweig 4 verbundene Anschluß des Elektromotors 1 den Pluspol. Es bildet sich in der Schaltungsanordnung eine leitfähige Verbindung zwischen den beiden Anschlüssen des Elektromotors 1 über den zweiten Stromzweig 4, den Umschalter 6, dem Massezweig 2, der leitenden ersten Diode 8 und dem ersten Stromzweig 3 aus, so daß sich die Zahnstrange bei einer Drehung der Ankerwelle maximal gedämpft wird und nicht selbsttätig ausfahren kann.

Aufgrund des spiegelsymmetrisch zur Verfügung stehenden Bauraumes sowie Aufgrund der Kabelführung wird der Gurtbringers des Fahrersitzes gegenüber den Gurtbringer des Beifahrersitzes um 180 Grad verdreht in den Personenkraftwagen eingebaut. Dadurch kehrt sich auch die Drehrichtung des Ankerwelle um, bei welcher der Gurtbringer beispielsweise ausfährt. Dementsprechend wird von dem Logikbaustein der Schaltungsanordnung anstelle des ersten Umschalters 5 der zweite Umschalter 6 mit der Stromquelle verbunden. Zudem besteht die Notwendigkeit, daß die andere Drehrichtung der Ankerwelle des Elektromotors 1 beim Einwirken einer äußeren Kraft gesperrt wird.

In den Figuren 3a und 3b ist der gegebenenfalls resultierende Stromfluß in der Schaltungsanordnung bei im zweiten Stromzweig 4 angeordnetem Schalter 10 für beide über die Zahnstange erzwungene Drehrichtungen der Ankerwelle des nicht bestromten Elektromotors 1 dargestellt. Die Position des Schalters 10 im zweiten Stromzweig 4 bedingt nun, daß die andere als in den Figuren 2a und 2b dargestellten Drehrichtung der Ankerwelle gesperrt wird.

Figur 3a zeigt den Stromfluß der Schaltungsanordnung für eine Drehrichtung der Ankerwelle des Elektromotors 1, die nun dem Ausfahren des Gurtbringers als Folge einer Verzögerung des Personenkraftwagens entspricht, und die als Drehung im Uhrzeigersinn dargestellt ist. Dabei bildet wieder der mit dem ersten Stromkreis 3 verbundene Anschluß des Elektromotors 1 den Pluspol und der mit dem zweiten Stromkreis 4 verbundene Anschluß des Elektromotors 1 den Minuspol. Es bildet sich in der Schaltungsanordnung eine leitfähige Verbindung zwischen den beiden Anschlüssen des Elektromotors 1 über den ersten Stromzweig 3, den Umschalter 5, dem Massezweig 2, der leitenden zweiten Diode 9 und dem zweiten Stromzweig 4 aus, so daß sich die Zahnstrange maximal gedämpft, wird und nicht selbsttätig ausfahren kann.

Figur 3b zeigt die Schaltungsanordnung für die andere Drehrichtung der Ankerwelle des Elektromotors 1, die nun dem Einfahren des Gurtbringers entspricht, und die als Drehung gegen den Uhrzeigersinn dargestellt ist. Dabei bildet der mit dem ersten Stromkreis 3 verbundene Anschluß des Elektromotors 1 den Minuspol und der mit dem zweiten Stromkreis 4 verbundene Anschluß des Elektromotors 1 den Pluspol.

Es bildet sich aufgrund der sperrenden zweiten Diode 9 in der Schaltungsanordnung keine leitfähige Verbindung zwischen den beiden Anschlüssen des Elektromotors 1 aus, so daß sich die Zahnstrange ohne gedämpft zu werden leicht einschieben läßt.

Durch die beschriebene Schaltungsanordnung eines zwei Anschlüsse aufweisenden Elektromotors 1 kann entsprechend der Position des Schalters 10 genau eine von außen erzwungenen Drehrichtung der Ankerwelle gesperrt werden, wobei die jeweils andere Drehrichtung der Ankerwelle ohne gedämpft zu werden drehbar bleibt. Dabei ist die Schaltungsanordnung einfach und kostengünstig zu realisieren.

## Patentansprüche

1. Schaltungsanordnung mit einem zwei Anschlüsse aufweisenden Elektromotor (1),
• bei der ein Anschluß des Elektromotors (1) mit einem ersten Stromzweig (3) und ein Anschluß des Elektromotors (1) mit einem zweiten Stromzweig (4) verbunden ist,
• bei der der erste und der zweite Stromzweig (3, 4) jeweils einen Umschalter (5, 6) aufweisen, durch welche der erste und der zweite Stromzweig (3, 4) zum Betrieb des Elektromotors (1) entsprechend der gewünschten Drehrichtung gegen eine Stromquelle (7) oder gegen einen Massezweig (2) geschaltet sind,
**gekennzeichnet durch**
• eine erste Diode, (8) die in Sperrrichtung zwischen dem ersten Stromzweig (3) und dem Massezweig (2) geschaltet ist,
• und eine zweite Diode (9), die in Sperrrichtung zwischen dem zweiten Stromzweig (4) und dem Massezweig (2) geschaltet ist,
• und ein Schalter (10), welcher abhängig von einer zu sperrenden Drehrichtung des ruhenden Elektromotors (1) zum Unterbrechen des jeweiligen Stromkreises
• entweder im ersten Stromzweig (3) zwischen dem ersten Umschalter (5) und dem Anschluß der ersten Diode (8) am ersten Stromzweig (3)
• oder im zweiten Stromzweig (4) zwischen dem zweiten Umschalter (6) und der zweiten Diode (9) angeordnet ist.

2. Schaltungsanordnung nach Anspruch 1, **dadurch gekennzeichnet, daß** die Umschalter (5,6) und der Schalter(10) als Relais gebildet sind.

3. Verfahren zum Sperren einer Drehrichtung eines Elektromotors in dessen ruhendem Zustand unter Verwendung einer Schaltungsanordnung nach einem der vorangehenden Ansprüche, in dem der Schalter (10) geöffnet wird.

## Claims

1. Switching arrangement with an electric motor (1) comprising two connections,
• with one connection of the electric motor (1) being connected with a first current branch (3) and one connection of the electric motor (1) being connected with a second current branch (4),
• the first and the second current branch (3, 4) comprising each a reversing switch (5, 6) by means of which for operating the electric motor (1) the first and the second current branch (3, 4) are connected according to the desired direction of rotation against a current resource (7) or against an earth branch (2),
• **characterized by** a first diode (8), which is connected in high-resistance direction between the first current branch (3) and the earth branch (2),
• and by a second diode (9), which is connected in high-resistance direction between the second current branch (4) and the earth branch (2),
• and by a switch (10), which is arranged depending on a direction of rotation to be blocked of the inactive electric motor (1) for interrupting the respective electric circuit
■ either in the first current branch (3) between the first reversing switch (5) and the connection of the first diode (8) at the first current branch (3)
■ or in the second current branch (4) between the second reversing switch (6) and the second diode (9).

2. Switching arrangement in accordance with claim 1, **characterized in that** the reversing switches (5, 6) and the switch (10) are formed as a relay.

3. Method for blocking a direction of rotation of an electric motor in its inactive state while using a switching arrangement in accordance with one of the preceding claims, in which the switch (10) is opened.

## Revendications

1. Circuit de commande muni d'un moteur électrique (1) présentant deux connexions,
• dans lequel une connexion du moteur électrique (1) est reliée à une première voie d'enroulement (3) et une connexion du moteur électrique (1)) est reliée à une seconde voie d'enroulement (4),
• dans lequel la première et la seconde voies d'enroulement (3, 4) présentent respectivement un commutateur (5, 6), par l'intermédiaire desquels la première et la seconde voies d'enroulement (3, 4), en vue du fonctionnement du moteur électrique (1), sont montées de façon correspondante à la direction de rotation souhaitée contre une source de courant (7) ou contre une voie de masse (2),
• **caractérisé par** une première diode (8), qui est montée dans la direction de blocage entre la première voie d'enroulement (3) et la voie de masse (2),
• et une seconde diode (9), qui est montée dans la direction de blocage entre la seconde voie d'enroulement (4) et la voie de masse (2),
• et un interrupteur (10), qui est disposé indépendamment de la direction de rotation à bloquer du moteur électrique statique (1), en vue de l'interruption du circuit électrique,
■ soit dans la première voie d'enroulement (3) entre le premier commutateur (5) et la connexion de la première diode (8) dans la première voie d'enroulement (3),
■ soit dans la seconde voie d'enroulement (4) entre le second commutateur (6) et la seconde diode (9).

2. Circuit de commande selon la revendication 1, **caractérisé en ce que** les commutateurs (5, 6) et l'interrupteur (10) sont réalisés sous forme de relais.

3. Procédé en vue du blocage d'une direction de rotation d'un moteur électrique dans son état statique par l'intermédiaire de l'utilisation d'un circuit de commande selon l'une des revendications précédentes, dans lequel l'interrupteur (10) est ouvert.
